Europäisches Patentamt

European Patent Office

Office européen des brevets

(19)

(11) Veröffentlichungsnummer: **0 344 344 B1**

(12)

# EUROPÄISCHE PATENTSCHRIFT

(45) Veröffentlichungstag der Patentschrift: **08.01.92**

(21) Anmeldenummer: **88108768.8**

(22) Anmeldetag: **01.06.88**

(51) Int. Cl.⁵: **F16N 29/04**, F04D 29/06, F04C 29/10

(54) Verfahren zur Überwachung einer ölgeschmierten Vakuumpumpe.

(43) Veröffentlichungstag der Anmeldung:
**06.12.89 Patentblatt 89/49**

(45) Bekanntmachung des Hinweises auf die
Patenterteilung:
**08.01.92 Patentblatt 92/02**

(84) Benannte Vertragsstaaten:
**AT BE CH DE ES FR GB GR IT LI LU NL SE**

(56) Entgegenhaltungen:
**DE-A- 2 054 822**
**DE-A- 3 236 012**
**DE-A- 3 519 026**
**US-A- 2 615 615**

**PATENT ABSTRACTS OF JAPAN, Band 10, Nr. 277 (M-519)[2333], 19. September 1986; & JP-A-61 98 927 (MITSUBISHI ELECTRIC CORP.) 17-05-1986**

(73) Patentinhaber: **LEYBOLD AKTIENGESELL-SCHAFT**
**Bonner Strasse 498**
**W-5000 Köln 51(DE)**

(72) Erfinder: **Abraham, Jean-Luc**
**34bis Chemin du Valentin**
**F-26500 Bourg lès Valence(FR)**
Erfinder: **Chavand, Jean-Luc**
**Le Panoramic 24, Av. de la République**
**F-07500 Granges lès Valence(FR)**
Erfinder: **Jeziorowski, Frédérique**
**6, rue Aristide Bruant**
**F-26000 Valence(FR)**

(74) Vertreter: **Leineweber, Jürgen, Dipl.-Phys. et al**
**Nagelschmiedshütte 8**
**W-5000 Köln 40(DE)**

**Beschreibung**

Die Erfindung bezieht sich auf ein Verfahren zur Überwachung der im Ölkreislauf einer ölgeschmierten Vakuumpumpe umströmenden Ölmenge, wobei im Ölkreislauf ein Ölfilter und ein Ölkühler angeordnet sind und wobei der Ölkühler als Wärmetauscher ausgebildet und vom Öl und von einem Kühlmedium durchströmt ist. Außerdem bezieht sich die Erfindung auf eine für die Durchführung dieses Verfahrens geeignet ausgebildete ölgeschmierte Vakuumpumpe. Vakuumpumpen, die mit einem Ölfilter und einem Ölkühler ausgerüstet sind, sind bekannt.

Ölgeschmierte Vakuumpumpen (Drehschiebevakuumpumpen, Sperrschiebervakuumpumpen oder dergleichen) sind im allgemeinen mit einem Ölfilter ausgerüstet, der im Ölkreislauf angeordnet ist. Dieser Filter dient u. a. dazu, das Öl von allen in ihm enthaltenen festen Partikeln zu reinigen, welche den Betrieb der Pumpen beeinträchtigen könnten. Im Laufe der Zeit setzt sich der Filter infolge der zurückbehaltenen Feststoffpartikel zu; die durch den Filter strömende Ölmenge nimmt ab. Würde ein Filterwechsel nicht vorgenommen, dann würde die den Filter durchsetzende Ölmenge nach und nach so gering, daß das Öl seine Funktionen (kühlen, dichten und schmieren) nicht mehr erfüllen kann. Es besteht dann die Gefahr, daß die Pumpe unzulässig hohe Temperaturwerte annimmt oder daß der Kolben frißt. Die vorliegende Erfindung befaßt sich mit dem Problem, mit Hilfe eines Kontrollsystemes den Zeitpunkt für einen Ölfilterwechsel zu ermitteln.

Es ist versucht worden, zur Feststellung eines ausreichenden Ölstromes im Ölkreislauf einer ölgeschmierten Vakuumpumpe allein die Temperatur des Öls heranzuziehen. Eine derartige Temperaturkontrolle hat sich jedoch als unzureichend erwiesen, da die Temperatur des Öles auch vom Ansaugdruck, von der Umgebungstemperatur und von der Temperatur des geförderten Mediums abhängt. Eindeutige Aussagen über die im Ölkreislauf strömende Ölmenge sind deshalb allein aus der Beobachtung der Öltemperatur nicht herleitbar.

Weiterhin ist versucht worden, die Druckdifferenz zwischen den Druckwerten vor und hinter dem Ölfilter zu verwerten. Auch diese Druckdifferenz ist - insbesondere bei Vakuumpumpen ohne Ölförderpumpe - vom Ansaugdruck abhängig, so daß allein die Feststellung der Druckdifferenz am Ölfilter noch keine eindeutige Aussage über die durch den Ölfilter strömende Ölmenge ermöglicht, zumal auch die Viskosität und die Öltemperatur unberücksichtigt bleiben.

Der vorliegenden Erfindung liegt die Aufgabe zugrunde, ein Verfahren der eingangs genannten Art vorzuschlagen, mit dessen Hilfe die den Ölkreislauf durchströmende Ölmenge bestimmt und damit in einfacher Weise überwacht werden kann.

Erfindungsgemäß wird diese Aufgabe dadurch gelöst, daß entweder die Temperatur des Ölstromes oder die Temperatur des Kühlmediumstromes auf der Eintrittsseite und auf der Austrittsseite des Ölkühlers gemessen wird, daß die beiden Temperaturwerte miteinander verglichen werden und daß beim Über- bzw. Unterschreiten einer vorgegebenen Temperaturdifferenz ein Warnsignal ausgelöst wird. Die Differenz der Temperaturen vor und hinter dem Ölkühler - sei es des Ölstromes selbst oder des Kühlmediums - läßt eindeutig auf die Menge des den Ölkühler durchströmenden Öls schließen. Wird z. B. die Temperatur des Öls im Ölkreislauf vor und hinter dem Wärmetauscher gemessen, dann nimmt die Temperaturdifferenz mit geringer werdender Ölmenge zu, da die pro Zeiteinheit vom Kühlmedium abgeführte Wärmemenge im wesentlichen konstant bleibt. Wird hingegen die Temperatur des Kühlmediums - Wasser, Luft - vor und hinter dem Ölkühler gemessen, dann nimmt die Temperaturdifferenz mit geringer werdendem Öldurchfluß ab. Diese Messungen sind unabhängig vom Ansaugdruck der Pumpe sowie von der Viskosität des Schmieröls. Auch langsame Veränderungen verursachen keine Meßwert-Verfälschungen. In beiden Fällen läßt sich ein Temperatur-Meßwert festlegen. Wird dieser erreicht oder über- bzw. unterschritten, dann wird ein optisches oder akustisches Warnsignal ausgelöst. Dieses gibt den Anwendern einen Hinweis auf den fälligen Ölfilterwechsel.

Weitere Vorteile und Einzelheiten der Erfindung sollen anhand von in den Figuren 1 bis 4 dargestellten Ausführungsbeispielen erläutert werden.

Alle Figuren zeigen eine Vakuumpumpe 1 mit dem eigentlichen Pumpenkörper 2, dem Ölkasten 3 und dem Antriebsmotor 4. Alle Vakuumpumpen 1 sind mit einem Ölkreislauf ausgerüstet. Ein Bestandteil dieses Ölkreislaufes ist der Ölfilter 5, der am Ölkasten 3 befestigt ist. Vom Ölfilter 5 führt eine Ölleitung 6 zu einem Ölkühler 7 (Figuren 1 und 2) bzw. 8 (Figuren 3 und 4). Vom Ölkühler 7 bzw. 8 gelangt das Öl über die Ölabströmleitung 9 in den Schöpfraum des Pumpenkörpers 2. im wesentlichen in diesem Bereich erfüllt das Öl seine Funktionen (Kühlung, Abdichtung und Schmierung). Aus dem Schöpfraum gelangt es mit dem geförderten Medium durch den Pumpenauslaß wieder zum Ölkasten 3 zurück.

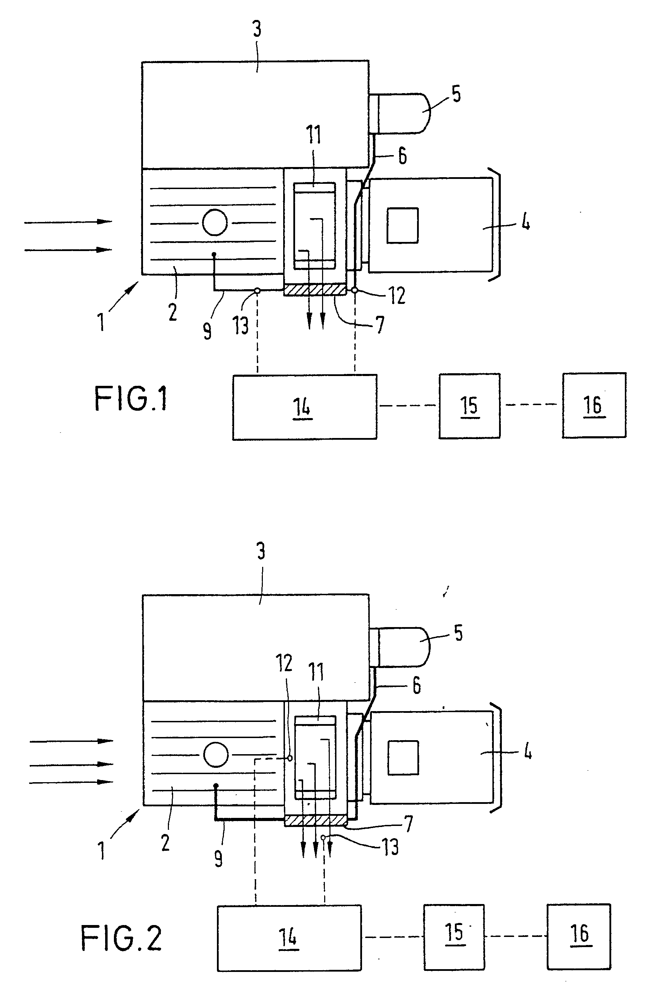

Die Vakuumpumpe 1 nach Figur 1 ist mit einem luftgekühlten Ölkühler 7 ausgerüstet. Dieser ist seitlich des Pumpenkörpers 2 angeordnet. Ein Lüfterrad 11 saugt die Kühlluft parallel zum Pumpenkörper 2 an und stößt sie radial durch den Ölkühler 7, einem Öl-Luft-Wärmetauscher aus.

Um die durch den Ölkühler 7 strömende Ölmenge zu messen, sind zwei Temperatursensoren 12 und 13 vorgesehen, von denen sich einer (12) in der Ölzuströmleitung 6 und der andere (13) in der Ölabströmleitung 9 befindet. Die von den Sensoren 12, 13 aufgenommenen Signale werden einer Vergleichsstufe 14 zugeführt. Diese bildet ein der Differenz der gemessenen Temperaturen entsprechendes Signal und gibt es über eine Zeitstufe 15, deren Funktion weiter unter erläutert wird, einem Warnsignalgeber 16 weiter.

Bei dem in Figur 1 dargestellten Ausführungsbeispiel bleibt die dem Ölkühler 7 infolge des Luftstromes abgeführte Wärmemenge im wesentlichen konstant. Deshalb wird die Differenz der von den Sensoren 12 und 13 gemessenen Temperaturen mit abnehmender, durch den Ölkühler 7 strömenden Ölmenge zunehmen. Erreicht die Temperaturdifferenz einen eingestellten Wert, dann wird vom Warnsignalgeber 16 ein Warnsignal ausgelöst. Dieses gibt dem Anwender zu erkennen, daß er den Filter 5 austauschen muß.

Der vorzugebende Wert der Temperaturdifferenz, bei welchem das Warnsignal ausgelöst wird, hängt maßgeblich von der Größe der Vakuumpumpe 1 ab. Bei einer Pumpe mit einem Saugvermögen von 250 m$^3$h und bei einem Ansaugdruck von 1 mbar beträgt der den Ölkreislauf durchsetzende Ölstrom etwa 450 l/h. Die bei diesem Ölstrom gemessene Temperaturdifferenz beträgt 10° C. Reduziert sich der Ölstrom auf 200 l/h, dann steigt die Temperaturdifferenz auf 17° C an. In diesem Bereich ist die Funktion der Pumpe nicht gefährdet. Erst dann, wenn der Ölstrom weiter abnimmt, besteht die Gefahr von Funktionsstörungen. Wird der zugehörige Wert der Temperaturdifferenz von 17° C für längere Zeit überschritten, dann wird das Warnsignal ausgelöst.

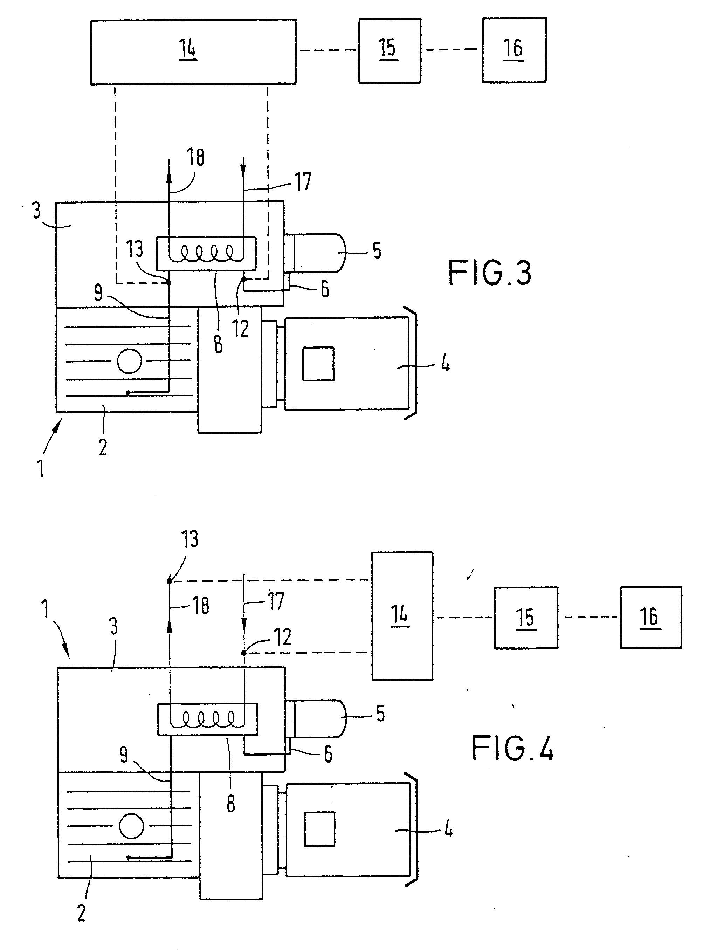

Das Ausführungsbeispiel nach Figur 2 unterscheidet sich vom Ausführungsbeispiel nach Figur 1 dadurch, daß die Temperatursensoren 12 und 13 nicht im Ölstrom, sondern im Luftstrom angeordnet sind. Bei einer Ausführung dieser Art wird die gemessene Temperaturdifferenz des Kühlmediums Luft mit sinkender, den Luftkühler 7 durchströmenden Ölmenge abnehmen. Erreicht die Temperaturdifferenz einen vorgegebenen unteren Wert, dann hat auch die durch den Luftkühler 7 strömende Ölmenge einen gerade noch zulässigen Wert erreicht. Wird der vorgegebene Wert der Temperaturdifferenz unterschritten, dann löst der Warnsignalgeber 16 das gewünschte Warnsignal aus. Bei den Ausführungsbeispielen nach Figur 3 und 4 ist anstelle des Luftkühlers 7 ein Wasserkühler 8 vorgesehen. Die Wasserzuführungsleitung ist mit 17, die Wasserabführungsleitung mit 18 bezeichnet.

Beim Ausführungsbeispiel nach Figur 3 sind die Temperatursensoren 12, 13 wieder in der Ölzuströmungsleitung 6 bzw. Ölabströmungsleitung 9 angeordnet. Eine Abnahme der den Kühler 8 durchströmenden Ölmenge hat wieder eine Zunahme der von den Temperatursensoren 12, 13 aufgenommenen Temperaturdifferenz zur Folge. Wie zum Ausführungsbeispiel nach Figur 1 beschrieben, wird beim Überschreiten eines vorab festgelegten Grenzwertes der Temperaturdifferenz vom Warnsignalgeber 16 ein Warnsignal ausgelöst.

Das Ausführungsbeispiel nach Figur 4 ist wie das Ausführungsbeispiel nach Figur 3 ebenfalls mit einem Öl-Wasser-Wärmetauscher 8 ausgerüstet. Die Temperatursensoren 12 und 13 befinden sich in der Wasserzuströmleitung bzw. Wasserabströmleitung. Mit abnehmender, durch den Kühler 8 strömenden Ölmenge wird auch - wie beim Ausführungsbeispiel nach Figur 2 - die aufgenommene Temperaturdifferenz abnehmen. Nach dem Unterschreiten eines vorgegebenen Wertes der Temperaturdifferenz wird vom Warnsignalgeber 16 ein Warnsignal ausgelöst.

Bei plötzlichen und starken Schwankungen der Umgebungstemperatur besteht die Möglichkeit, daß die gemessene Temperaturdifferenz den vorgegebenen Wert über- bzw. unterschreitet, obwohl eine ausreichende Ölmenge im Ölkreislauf strömt. Erst nach einigen Minuten, und zwar nach einer Anpassung an die veränderte Umgebungstemperatur, treten wieder die gewünschten Temperaturverhältnisse ein. Um zu verhindern, daß eine plötzliche Temperaturschwankung ein Warnsignal auslöst, ist die Zeitstufe 15 vorgesehen, die zwischen der Vergleichsstufe 14 und dem Warnsignalgeber 16 angeordnet ist. Die Zeitstufe hat die Funktion zu kontrollieren, ob der für die Auslösung eines Warnsignales maßgebliche Temperaturwert nur kurzzeitig (für wenige Sekunden oder Minuten) unter-bzw. überschritten wird. Bei nur kurzzeitiger Unter- bzw. Überschreitung des Grenzwertes wird ein Warnsignal nicht ausgelöst.

Nur dann, wenn kritische Grenzwerte für längere Zeit unter- bzw. überschritten werden, wird das Warnsignal ausgelöst.

Eine Zeitstufe mit der beschriebenen Funktion hat auch für den Normalbetrieb Vorteile. Infolge des nach und nach sich verstopfenden Filters nimmt die den Ölkühler 7, 8 durchströmende Ölmenge nach und nach ab. Es besteht die Möglichkeit, daß sie für eine gewisse Zeit um die untere Grenzmenge oszilliert. Bei einer einmaligen, kurzzeitigen Unterschreitung der unteren Ölgrenzmenge ist die Auslösung eines Warnsignales noch nicht erforderlich, insbesondere dann, wenn der untere bzw. obere Temperaturgrenzwert sicherheitshalber so eingestellt ist, daß die bei diesem Grenzwert strömende Ölmenge zur Versorgung der Vakuumpumpe noch völlig ausreicht, kurzzeitig also eine geringere Ölmenge ohne weiteres in Kauf genommen werden kann. Erst dann, wenn die jeweiligen Grenzwerte für eine längere Zeit über- bzw. unterschritten werden, wird das Warnsignal ausgelöst.

Zusammenfassend kann also durch die Zeitstufe 15 vermieden werden,

- daß bei schnellen Änderungen der Umgebungstemperatur Warnsignale abgegeben werden, obwohl eine ausreichende Ölmenge durch den Ölkühler strömt, und
- daß Warnsignale abgegeben werden, wenn die zugehörigen Temperaturgrenzwerte nur kurzzeitig unter- bzw. überschritten werden.

## Patentansprüche

1. Verfahren zur Überwachung der im Ölkreislauf einer ölgeschmierten Vakuumpumpe (1) umströmenden Ölmenge, wobei im Ölkreislauf ein Ölfilter (5) und ein Ölkühler (7, 8) angeordnet sind und wobei der Ölkühler als Wärmetauscher ausgebildet und vom Öl und von einem Kühlmedium durchströmt ist, dadurch gekennzeichnet, daß entweder die Temperatur des Ölstromes oder die Temperatur des Kühlmediumstromes auf der Eintrittsseite und auf der Austrittsseite des Ölkühlers (7, 8) gemessen wird, daß die beiden Temperaturwerte miteinander verglichen werden und daß beim Über- bzw. Unterschreiten einer vorgegebenen Temperaturdifferenz ein Warnsignal ausgelöst wird.

2. Verfahren nach Anspruch 1, dadurch gekennzeichnet, daß das den Ölkühler (7, 8) durchströmende Öl mit Luft oder Wasser gekühlt wird und daß die Temperatur des Öls in der Ölzustromleitung (6) mit der Temperatur des Öls in der Abströmleitung (9) verglichen wird.

3. Verfahren nach Anspruch 1, dadurch gekennzeichnet, daß das den Ölkühler (8) durchströmende Öl mit Wasser gekühlt wird und daß die Temperatur des Wassers in der Wasserzuströmleitung (17) mit der Temperatur des Wassers in der Wasserabströmleitung (18) verglichen wird.

4. Verfahren nach Anspruch 1, dadurch gekennzeichnet, daß das den Ölkühler (7) durchströmende Öl mit Luft gekühlt wird und daß die Temperatur der Luft vor dem Durchtritt durch den Ölkühler mit der Temperatur der Luft nach dem Durchtritt durch den Ölkühler verglichen wird.

5. Verfahren nach einem der vorhergehenden Ansprüche, dadurch gekennzeichnet, daß nach der Auslösung des Warnsignales der Ölfilter (5) ausgetauscht wird.

6. Ölgeschmierte Vakuumpumpe (1) zur Durchführung des Verfahrens nach einem der vorhergehenden Ansprüche, mit einem Ölkreislauf, mit einem im Ölkreislauf angeordneten Ölfilter (5) und mit einem im Ölkreislauf angeordneten Ölkühler (7, 8), welcher als Wärmetauscher ausgebildet und vom Öl sowie von einem Kühlmedium durchströmt ist, dadurch gekennzeichnet daß im Zuströmungsbereich und im Abströmungsbereich des zu kühlenden Öls oder des Kühlmediums Temperatursensoren (12, 13) angeordnet sind und daß zur Feststellung der Differenz der gemessenen Temperaturen eine Vergleichsstufe (14) vorgesehen ist, welcher ein Warnsignalgeber (16) zugeordnet ist.

7. Vakuumpumpe nach Anspruch 6, dadurch gekennzeichnet, daß zwischen der Vergleichsstufe (14) und dem Warnsignalgeber (16) eine Zeitstufe (15) angeordnet ist.

## Claims

1. Method of monitoring the rate of oil flow in the oil circuit of an oil lubricated vacuum pump (1), with an oil filter (5) and an oil cooler (7, 8) being disposed in the oil circuit and with the oil cooler taking the form of a heat exchanger through which the oil and a cooling medium flow, characterised in that either the temperature of the oil flow or the temperature of the cooling medium flow is measured on the inlet side and on the outlet side of the oil cooler (7, 8), that the two temperature values are compared with one another, and that when a preset temperature difference is exceeded or not reached an alarm signal is triggered.

2. Method according to claim 1, characterised in that the oil flowing through the oil cooler (7, 8) is cooled with air or water, and that the temperature of the oil in the oil supply line (6) is compared with the temperature of the oil in the discharge line (9).

3. Method according to claim 1, characterised in that the oil flowing through the oil cooler (8) is cooled with water, and that the temperature of the water in the water supply line (17) is compared with the temperature of the water in the water discharge line (18).

4. Method according to claim 1, characterised in that the oil flowing through the oil cooler (7) is cooled with air, and that the temperature of the air prior to passing through the oil cooler is compared with the temperature of the air after passing through the oil cooler.

5. Method according to one of the preceding claims, characterised in that the oil filter (5) is changed after triggering of the alarm signal.

6. Oil lubricated vacuum pump (1) for effecting the method according to one of the preceding claims, having an oil circuit, having an oil filter (5) disposed in the oil circuit and having an oil cooler (7, 8) in the form of a heat exchanger which is disposed in the oil circuit and through which the oil and a cooling medium flow, characterised in that temperature sensors (12, 13) are disposed in the supply region and in the discharge region of the oil to be cooled or of the cooling medium, and that to determine the difference between the measured temperatures there is provided a comparison module (14), with which an alarm signal generator (16) is associated.

7. Vacuum pump according to claim 6, characterised in that a timer module (15) is disposed between the comparison module (14) and the alarm signal generator (16).

**Revendications**

1. Procédé pour contrôler la quantité d'huile circulant dans le circuit d'huile d'une pompe à vide (1) lubrifiée à l'huile, un filtre à huile (15) et un refroidisseur d'huile (7, 8) étant disposés dans le circuit d'huile et le refroidisseur d'huile étant sous forme d'un échangeur de chaleur parcouru par l'huile et par un réfrigérant, caractérisé en ce que la température du courant d'huile ou la température du courant de réfrigérant est mesurée du côté de l'entrée et du côté de la sortie du refroidisseur d'huile (7, 8), en ce que les deux valeurs de température sont comparées l'une à l'autre et en ce qu'un signal avertisseur est déclenché lorsque la différence entre ces températures devient supérieure ou inférieure à une différence de température prédéterminée.

2. Procédé selon la revendication 1, caractérisé en ce que l'huile qui traverse le refroidisseur d'huile (7, 8) est refroidie à l'air ou à l'eau et en ce que la température de l'huile dans la conduite d'amenée d'huile (6) est comparée à la température de l'huile dans la conduite de sortie d'huile (9).

3. Procédé selon la revendication 1, caractérisé en ce que l'huile qui traverse le refroidisseur d'huile (8) est refroidie à l'eau et en ce que la température de l'eau dans la conduite d'amenée d'eau (17) est comparée à la température de l'eau dans la conduite de sortie d'eau (18).

4. Procédé selon la revendication 1, caractérisé en ce que l'huile qui traverse le refroidisseur d'huile (7) est refroidie à l'air et en ce que la température de l'air qui n'a pas encore traversé le refroidisseur d'huile est comparée à la température de l'air qui a traversé le refroidisseur d'huile.

5. Procédé selon l'une des revendications précédentes, caractérisé en ce que le filtre à huile (5) est changé à la suite du déclenchement du signal avertisseur.

6. Pompe à vide (1) lubrifiée à l'huile pour la mise en oeuvre du procédé selon l'une des revendications précédentes, avec un circuit d'huile, un filtre à huile (5) disposé dans le circuit d'huile et un refroidisseur d'huile (7, 8) disposé dans le circuit d'huile, le refroidisseur d'huile étant sous forme d'un échangeur de chaleur traversé par l'huile et par un réfrigérant, caractérisée en ce que des capteurs de température (12, 13) sont disposés dans la zone d'amenée et dans la zone de sortie de l'huile à refroidir ou du réfrigérant et en ce que, pour déterminer la différence entre les températures mesurées, il est prévu un étage comparateur (14) auquel est associé un dispositif avertisseur (16).

7. Pompe à vide selon la revendication 6, caractérisée en ce qu un étage de temporisation (15) est disposé entre l'étage comparateur (14) et le dispositif avertisseur (16).

FIG.1

FIG.2

FIG.3

FIG.4